# EUROPÄISCHE PATENTSCHRIFT

(11) **EP 3 695 928 B1**
(45) Veröffentlichungstag und Bekanntmachung des Hinweises auf die Patenterteilung: **21.06.2023**
(21) Anmeldenummer: 19157059.7
(22) Anmeldetag: 14.02.2019
(51) Int. Cl.: B23C 5/10

(54) **FRÄSWERKZEUG FÜR DIE BEARBEITUNG VON FASERVERBUNDWERKSTOFFEN**
MILLING TOOL FOR MACHINING FIBRE COMPOSITES
OUTIL DE FRAISAGE POUR LE TRAITEMENT DES MATÉRIAUX COMPOSITES EN FIBRES

(43) Veröffentlichungstag der Anmeldung: 19.08.2020
(73) Patentinhaber: CERATIZIT Balzheim GmbH & Co. KG, 88481 Balzheim (DE)
(72) Erfinder: RAPP, Oliver, 88481 Balzheim (DE); WALCHER, Jochen, 88481 Balzheim (DE); SCHMID, Michael, 88481 Balzheim (DE)
(74) Vertreter: Ciesla, Dirk

(56) Entgegenhaltungen:
- DE-A1-102017 112 827
- DE-B- 1 264 933
- DE-C- 437 324
- US-A1- 2014 100 574
- US-A1- 2017 216 936

## Beschreibung

Die vorliegende Erfindung betrifft ein Fräswerkzeug für die Bearbeitung von Faserverbundwerkstoffen.

DE 437 324 C beschreibt einen Wälzfräser zum Schneiden von Verzahnungen mit zwei in verschiedenen Richtungen verlaufenden schraubenförmigen Nuten, die sich in einer Profilnut schneiden.

Bei der Bearbeitung von Faserverbundwerkstoffen, wie insbesondere kohlenfaserverstärkten Kunststoffen (CFK), aramidfaserverstärkten Kunststoffen (AFK), glasfaserverstärkten Kunststoffen (GFK) und polyesterfaserverstärkten Kunststoffen, kommen Fräswerkzeuge zum Einsatz, die oftmals einstückig bzw. monolithisch aus einem Schneidwerkstoff, wie insbesondere Hartmetall, Cermet oder einer Schneidkeramik, gebildet sind und gegebenenfalls auch noch mit einer PVD- (physical vapor deposition) oder CVD- (chemical vapor deposition) Hartstoffbeschichtung versehen sind. Insbesondere im Bereich von Anwendungen für den Flugzeugbau sind die zu bearbeitenden Faserverbundwerkstoffe oftmals auch noch mit einem Kupfernetz ("copper mesh") versehen, was zusätzliche Herausforderungen an die zum Einsatz kommenden Fräswerkzeuge stellt.

Bei der Bearbeitung von solchen Werkstoffen ist es für die resultierende Bauteilqualität von entscheidender Bedeutung, dass unabhängig von der Bearbeitungsrichtung die Oberseite und die Unterseite des Werkstücks sauber geschnitten werden, sodass keine Fasern oder andere Reste des Verbundwerkstoffs überstehen. Ferner muss bei der Bearbeitung darauf geachtet werden, dass eine möglichst geringe Krafteinwirkung auf das in der Regel sehr dünnwandig ausgeführte Bauteil ausgeübt wird. Insbesondere muss eine Krafteinwirkung zuverlässig vermieden werden, die in einer Delamination des Verbundwerkstoffes resultieren würde. Desweiteren wird gefordert, dass die gefrästen Oberflächen möglichst glatt und frei von aus dem Fräsprozess resultierenden Rillen sein sollen.

Je nach der gewünschten Bearbeitung kommen dabei z.B. rechtsschneidende Fräswerkzeuge und auch linksschneidende Fräswerkzeuge zum Einsatz, die sich darin unterscheiden, ob die Fräswerkzeuge für einen Betrieb mit einer Rotationsrichtung im Uhrzeigersinn oder gegen den Uhrzeigersinn ausgelegt sind. Die Auslegung als rechtsschneidendes Fräswerkzeug bzw. linksschneidendes Fräswerkzeug betrifft insbesondere die konkrete Zurichtung der einzelnen realisierten Schneidkanten.

Es ist Aufgabe der vorliegenden Erfindung, ein Fräswerkzeug für die Bearbeitung von Faserverbundwerkstoffen bereitzustellen, mit dem Verbundwerkstoffe an Ober- und Unterseite sauber bearbeitet werden können, mit dem möglichst glatte gefräste Oberflächen realisiert werden können und die in einer Längsrichtung des Fräswerkzeugs wirkenden Schnittkräfte (ziehende und schiebende Kräfte) gezielt vorgegeben werden können.

Die Aufgabe wird durch ein Fräswerkzeug für die Bearbeitung von Faserverbundwerkstoffen nach Anspruch 1 gelöst. Vorteilhafte Weiterbildungen ergeben sich aus den abhängigen Ansprüchen.

Die ersten Umfangsschneiden und die zweiten Umfangsschneiden sind jeweils entlang einer gemeinsamen umhüllenden Zylindermantelfläche ausgebildet, die den Außenumfang des Schneidenabschnitts bestimmt, die ersten und die zweiten Umfangsschneiden berühren also nicht nur im Wesentlichen punktförmig die Zylindermantelfläche, die den Außenumfang des Schneidenabschnitts bestimmt, sondern erstrecken sich stattdessen jeweils linienartig entlang der Zylindermantelfläche. In dieser Weise ist erreicht, dass das Fräswerkzeug bei der Rotation eine geschlossene Zylindermantelfläche abbildet und folglich eine Bildung von Rillen an der bearbeiteten Werkstückoberfläche vermieden wird.

Da die einzelnen zwischen den ersten und den zweiten Hauptspannuten ausgebildeten Schneideinheiten durch die Hilfsspannuten unterteilt sind, die gegenüber den den ersten Umfangsschneiden zugeordneten ersten Freiflächen und gegenüber den den zweiten Umfangsschneiden zugeordneten zweiten Freiflächen in radialer Richtung vertieft ausgeführt sind, sich also tiefer in Richtung der Längsachse des Fräswerkzeugs erstrecken als die ersten Freiflächen und die zweiten Freiflächen, können die in Umfangsrichtung hinter den ersten Umfangsschneiden realisierten ersten Freiwinkel und die in Umfangsrichtung hinter den zweiten Umfangsschneiden realisierten zweiten Freiwinkel unabhängig voneinander und unabhängig von der Tiefe der Spannuten ausgebildet werden. In dieser Weise besteht auch eine große Flexibilität bei der Einstellung der Keilwinkel der ersten Umfangsschneiden und der zweiten Umfangsschneiden. Insbesondere können die ersten und zweiten Freiwinkel auch z.B. sehr klein ausgebildet werden und so sehr stabile Schneidkeile realisiert werden, ohne dabei die Abfuhr der erzeugten Späne bzw. des erzeugten Materialstaubs zu behindern.

Die Spiralwinkel der ersten Hauptspannuten und die Spiralwinkel der zweiten Hauptspannuten sowie die Längen der jeweiligen ersten Umfangsschneiden und der jeweiligen zweiten Umfangsschneiden können unabhängig voneinander geändert werden. So können gezielt Vibrationen unterbunden werden. Z.B. kann sich der Spiralwinkel der ersten Hauptspannuten betragsmäßig von dem Spiralwinkel der zweiten Hauptspannuten unterscheiden und die Anzahl der ersten Hauptspannuten kann sich von der Anzahl der zweiten Hauptspannuten unterscheiden. In dieser Weise besteht auch die Möglichkeit, die auf das Werkstück wirkenden Schnittkräfte gezielt vorzugeben. Somit kann das Fräswerkzeug derart ausgelegt werden, dass es überwiegend "drückende" bzw. "schiebende" Schnittkräfte ausübt, die in Richtung des freien Endes des Schneidenabschnitts wirken, es kann derart ausgelegt werden, dass es überwiegend "ziehende" Schnittkräfte ausübt, die in Richtung des Einspannabschnittes wirken oder es kann auch derart ausgelegt werden, dass sich "drückende" und "ziehende" Schnittkräfte zumindest im Wesentlichen kompensieren.

Die Hilfsspannuten erstrecken sich entlang Linksspiralen, die parallel zu den ersten Hauptspannuten verlaufen, oder die Hilfsspannuten erstrecken sich entlang Rechtsspiralen, die parallel zu den zweiten Hauptspannuten verlaufen. Mit anderen Worten erstrecken sich die Hilfsspannuten entweder parallel zu den ersten Hauptspannuten oder parallel zu den zweiten Hauptspannuten. Somit sind die einzelnen Schneideinheiten über den gesamten Schneidenabschnitt zuverlässig in den ersten Bereich und den zweiten Bereich unterteilt.

Gemäß einer Weiterbildung sind die Hilfsspannuten in radialer Richtung weniger tief ausgebildet als die ersten und zweiten Hauptspannuten. Die ersten und zweiten Hauptspannuten können z.B. gleich tief ausgebildet sein, insbesondere gleich tief in das Material des Fräswerkzeugs eingeschliffen sein, oder aber auch unterschiedlich tief ausgebildet sein. Durch die weniger tiefe

Ausbildung der Hilfsspannuten wird die Struktur der zwischen den sich kreuzenden ersten und zweiten Hauptspannuten ausgebildeten Schneideinheiten in einer stabilen Weise bewahrt und dabei gleichzeitig eine unabhängige Auslegung der ersten und zweiten Freiwinkel sowie der Schneidkeile im Bereich der ersten Umfangsschneiden und im Bereich der zweiten Umfangsschneiden ermöglicht.

Gemäß einer Weiterbildung ist der Betrag des Spiralwinkels der zweiten Hauptspannuten von dem Betrag des Spiralwinkels der ersten Hauptspannuten verschieden. Da die ersten Hauptspannuten als Linksspiralen ausgebildet sind und die zweiten Hauptspannuten als Rechtsspiralen, ist das Vorzeichen des Spiralwinkels verschieden (einmal negativ, einmal positiv). Da sich der Spiralwinkel ferner im Betrag unterscheidet, können die wirkenden Schnittkräfte gezielt eingestellt werden.

Gemäß einer Weiterbildung ist eine erste Schneidenlänge der jeweiligen ersten Umfangsschneide von einer zweiten Schneidenlänge der jeweiligen zweiten Umfangsschneide verschieden. Die erste Schneidenlänge und die zweiten Schneidenlänge können insbesondere gezielt über die Anzahl der ersten Hauptspannuten und die Anzahl der zweiten Hauptspannuten eingestellt werden. Die unterschiedliche Länge der ersten und zweiten Umfangsschneiden ermöglicht eine gezielte Einstellung der wirkenden Schnittkräfte, insbesondere in Verbindung mit einer gezielten Einstellung der Spiralwinkel der ersten Hauptspannuten und der zweiten Hauptspannuten.

Gemäß einer Weiterbildung schließt sich in Umfangsrichtung an die erste Freifläche jeweils eine erste Sekundärfreifläche mit einem ersten Sekundärfreiwinkel an, der größer als der erste Freiwinkel ist. In diesem Fall können die Schneidkeile der ersten Umfangsschneiden besonders stabil ausgelegt werden und es können auch kleine erste Freiwinkel realisiert werden, ohne die Oberflächenqualität der zu fräsenden Flächen zu gefährden.

Gemäß einer Weiterbildung schließt sich in Umfangsrichtung an die zweite Freifläche jeweils eine zweite Sekundärfreifläche mit einem zweiten Sekundärfreiwinkel an der größer als der zweite Freiwinkel ist. In diesem Fall können auch die Schneidkeile der zweiten Umfangsschneiden besonders stabil ausgelegt werden und es können auch kleine zweite Freiwinkel realisiert werden, ohne die Oberflächenqualität der zu fräsenden Flächen zu gefährden. Besonders vorteilhaft ist die Kombination von ersten Sekundärfreiflächen bei den ersten Umfangsschneiden und zweiten Sekundärfreiflächen bei den zweiten Umfangsschneiden.

Gemäß einer Weiterbildung sind sowohl die ersten Umfangsschneiden als auch die zweiten Umfangsschneiden rechtsschneidend ausgebildet oder sind sowohl die ersten Umfangsschneiden als auch die zweiten Umfangsschneiden linksschneidend ausgebildet. Es ist somit möglich, das Fräswerkzeug entweder als rechtsschneidendes Werkzeug, d.h. für eine "normale" Rotationsrichtung, oder als linksschneidendes Werkzeug auszulegen, wobei jeweils die einzelnen Schneidelemente eine "ziehend" wirkende Umfangsschneide und eine "drückend" wirkende Umfangsschneide aufweisen.

Gemäß einer Weiterbildung sind der Einspannabschnitt und der Schneidenabschnitt einstückig, also monolithisch, ausgebildet. Dabei können der Einspannabschnitt und der Schneidenabschnitt insbesondere aus demselben Material ausgebildet sein.

Weitere Vorteile und Zweckmäßigkeiten der Erfindung ergeben sich anhand der nachfolgenden Beschreibung von Ausführungsbeispielen unter Bezugnahme auf die beigefügten Figuren.

### Von den Figuren zeigen:

- Fig. 1:: ist eine schematische Seitenansicht eines Fräswerkzeugs gemäß einer ersten Ausführungsform;
- Fig. 2:: ist eine vergrößerte Ansicht des Schneidenabschnitts bei dem Fräswerkzeug gemäß Fig. 1;
- Fig. 3:: ist eine schematisch Querschnittsdarstellung der in Fig. 2 mit LR gekennzeichneten ersten Umfangsschneide;
- Fig. 4:: ist eine schematische Querschnittsdarstellung der in Fig. 2 mit RR gekennzeichneten zweiten Umfangsschneide;
- Fig. 5:: ist eine schematische Darstellung in Stirnansicht des Schneidenabschnitts mit einer Projektionsdarstellung der zweiten Hauptspannuten und der Hilfsspannuten bei der ersten Ausführungsform;
- Fig. 6:: ist eine schematische Darstellung in Stirnansicht des Schneidenabschnitts mit einer Projektionsdarstellung der ersten Hauptspannuten bei der ersten Ausführungsform;
- Fig. 7:: ist eine schematische Seitenansicht eines Fräswerkzeugs gemäß einer zweiten Ausführungsform;
- Fig. 8:: ist eine vergrößerte Ansicht des Schneidenabschnitts bei dem Fräswerkzeug gemäß Fig. 7; und
- Fig. 9:: ist eine schematisch Querschnittsdarstellung der in Fig. 8 mit LR gekennzeichneten ersten Umfangsschneide;
- Fig. 10:: ist eine schematische Querschnittsdarstellung der in Fig. 8 mit RR gekennzeichneten zweiten Umfangsschneide;
- Fig. 11:: ist eine schematische Darstellung in Stirnansicht des Schneidenabschnitts mit einer Projektionsdarstellung der zweiten Hauptspannuten bei der zweiten Ausführungsform; und
- Fig. 12:: ist eine schematische Darstellung in Stirnansicht des Schneidenabschnitts mit einer Projektionsdarstellung der ersten Hauptspannuten und der Hilfsspannuten bei der zweiten Ausführungsform.

### ERSTE AUSFÜHRUNGSFORM

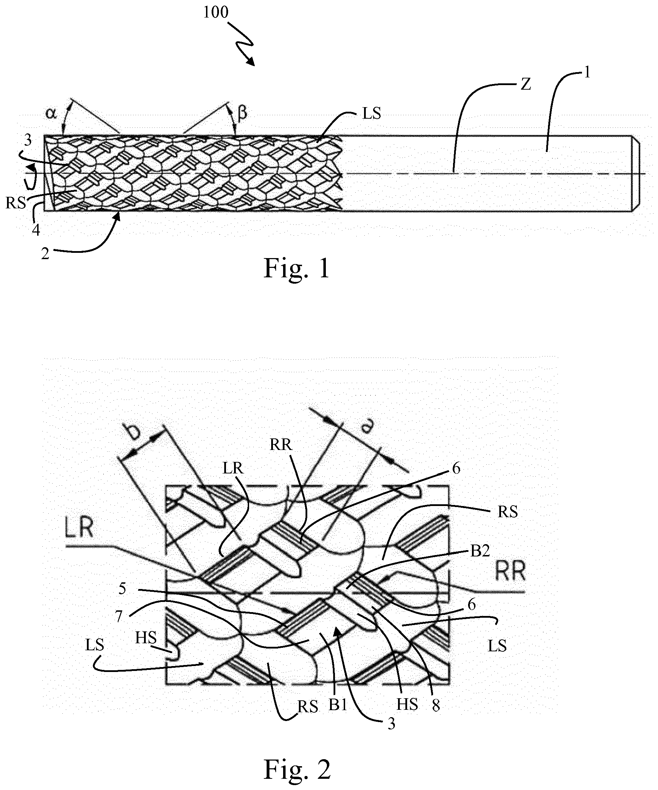

Eine erste Ausführungsform wird im Folgenden unter Bezugnahme auf die Fig. 1 bis Fig. 6 eingehender beschrieben.

Das Fräswerkzeug 100 für die Bearbeitung von Faserverbundwerkstoffen gemäß der ersten Ausführungsform weist einen Einspannabschnitt 1 und einen Schneidenabschnitt 2 auf, die sich entlang einer Längsachse Z erstrecken. Das Fräswerkzeug 100 ist als ein Schaftfräser ausgebildet. Der Einspannabschnitt 1 und der Schneidenabschnitt 2 sind dabei einstückig bzw. monolithisch aus einem harten Material gebildet, das z.B. Hartmetall (cemented carbide), Cermet oder eine Schneidkeramik sein kann. Bevorzugt kann das Fräswerkzeug 100 dabei insbesondere aus Hartmetall gebildet sein, somit als sogenanntes Vollhartmetallwerkzeug ausgebildet sein. Hartmetall (cemented carbide) ist ein Verbundwerkstoff, der überwiegend aus einem Gerüst aus Hartstoffpartikeln besteht und bei dem Zwischenräume zwischen den Hartstoffpartikeln durch einen duktilen metallischen Binder gefüllt sind. Am gebräuchlichsten ist Hartmetall, bei dem die Hartstoffpartikel zumindest überwiegend aus Wolframkarbid gebildet sind und der metallische Binder eine Kobalt-Basislegierung oder eine Nickel-Basislegierung ist.

Der Einspannabschnitt 1 ist dazu ausgebildet, in einer Werkzeugaufnahme einer Bearbeitungsmaschine aufgenommen zu werden. Obwohl bei der Ausführungsform eine Realisierung dargestellt ist, bei der der Einspannabschnitt 1 eine im Wesentlichen zylindrische Form aufweist, kann der Einspannabschnitt 1 z.B. auch eine abweichende Form mit z.B. einer oder mehreren Klemm- oder Halteflächen aufweisen.

Im Folgenden wird der Schneidenabschnitt 2 des Fräswerkzeugs 100 eingehender beschrieben.

Wie in der Seitenansicht von Fig. 1 und in der vergrößerten Detaildarstellung in Fig. 2 zu sehen ist, hat der Schneidenabschnitt 2 eine im Wesentlichen zylindrische Grundform und es sind in das Material des Schneidenabschnitts 2 eine Mehrzahl von als Linksspiralen ausgebildeten ersten Hauptspannuten LS und eine Mehrzahl von als Rechtsspiralen ausgebildeten zweiten Hauptspannuten RS eingebracht. Die Mehrzahl von ersten Hauptspannuten LS und die Mehrzahl von zweiten Hauptspannuten RS kreuzen sich in dem Schneidenabschnitt 2, sodass der Schneidenabschnitt 2 in eine Vielzahl von einzelnen Schneideinheiten 3 unterteilt ist, die jeweils durch die sich kreuzenden ersten Hauptspannuten LS und zweiten Hauptspannuten RS voneinander getrennt sind. Die einzelnen Schneideinheiten 3 weisen dabei in Aufsicht jeweils eine im Wesentlichen rechteckige bzw. Parallelogramm-artige Grundform mit zwei gegenüberliegenden längeren Seiten und zwei gegenüberliegenden kürzeren Seiten auf.

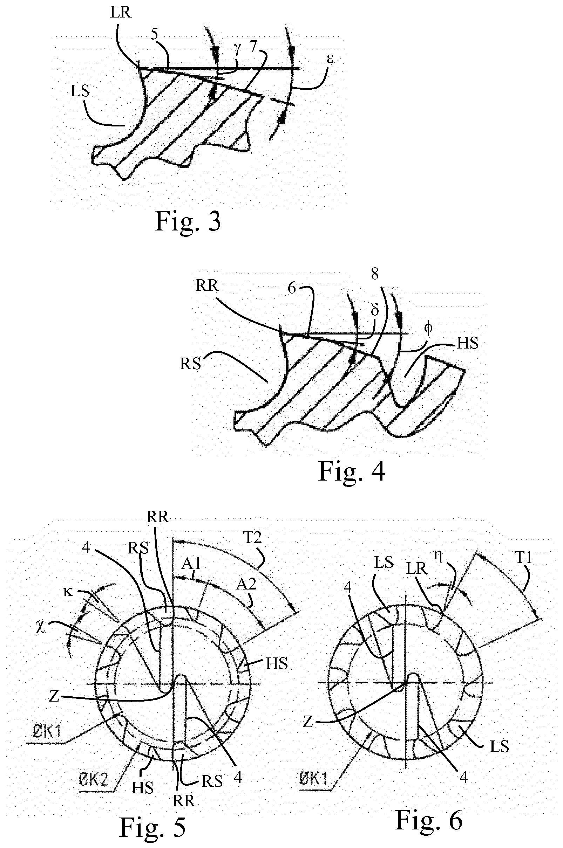

Wie insbesondere in den schematischen Darstellungen der Fig. 5 und Fig. 6 zu sehen ist, sind bei dem konkret dargestellten Beispiel insgesamt zehn erste Hauptspannuten LS und sechs zweite Hauptspannuten RS ausgebildet. Es ist jedoch zu beachten, dass auch andere Anzahlen von ersten Hauptspannuten LS und von zweiten Hauptspannuten RS vorgesehen sein können. Insbesondere kann z.B. auch die Anzahl der zweiten Hauptspannuten RS größer als die Anzahl der ersten Hauptspannuten LS sein. Bevorzugt kann die Anzahl der zweiten Hauptspannuten RS aber von der Anzahl der ersten Hauptspannuten LS verschieden sein. Bei dem konkret dargestellten Beispiel sind die ersten Hauptspannuten LS unter einem ersten Teilungswinkel T1 und die zweiten Hauptspannuten RS unter einem zweiten Teilungswinkel T2 jeweils gleichmäßig über den Umfang des Schneidenabschnitts 2 verteilt.

Bei der Ausführungsform sind an dem von dem Einspannabschnitt 1 abgewandten freien Ende des Schneidenabschnitts 2 ferner Stirnschneiden 4 ausgebildet, wie insbesondere in den schematischen Darstellungen der Fig. 5 und der Fig. 6 zu sehen ist. Obwohl bei dem konkreten Beispiel zwei Stirnschneiden 4 realisiert, ist auch eine andere Anzahl an Stirnschneiden möglich.

Wie in Fig. 1 dargestellt ist, verlaufen die ersten Hauptspannuten LS unter einem negativen Spiralwinkel β und die zweiten Hauptspannuten RS verlaufen unter einem positiven Spiralwinkel α. Der negative Spiralwinkel β der ersten Hauptspannuten LS unterscheidet sich bei der ersten Ausführungsform betragsmäßig von dem positiven Spiralwinkel α der zweiten Hauptspannuten RS, d.h. |α| ≠ |β|.

Die durch die sich kreuzenden ersten Hauptspannuten LS und zweiten Hauptspannuten RS gebildeten Schneideinheiten 3 weisen jeweils eine entlang einer Linksspirale verlaufende erste Umfangsschneide LR und eine entlang einer Rechtsspirale verlaufende zweite Umfangsschneide RR auf, wie insbesondere in Fig. 2 zu sehen ist. Die ersten Umfangsschneiden LR der Vielzahl von Schneideinheiten 3 verlaufen dabei entlang der Oberfläche eines gemeinsamen Zylinders und die zweiten Umfangsschneiden RR der Vielzahl von Schneideinheiten 3 verlaufen entlang der Oberfläche desselben gemeinsamen Zylinders, sodass die ersten Umfangsschneiden LR und die zweiten Umfangsschneiden RR die umhüllende Zylindermantelfläche des Schneidenabschnitts bestimmen. Die einzelnen ersten Umfangsschneiden LR und die einzelnen zweiten Umfangsschneiden RR erstrecken sich dabei jeweils im Wesentlichen linienförmig entlang dieser umhüllenden Zylindermantelfläche.

Wie in Fig. 2 zu sehen ist, haben die ersten Umfangsschneiden LR jeweils eine Schneidenlänge b und die zweiten Umfangsschneiden RR haben jeweils eine Schneidenlänge a. Bei der ersten Ausführungsform ist die Schneidenlänge b der ersten Umfangsschneiden LR von der Schneidenlänge a der zweiten Umfangsschneiden RR verschieden, d.h. a ≠ b. Das Fräswerkzeug 100 gemäß der ersten Ausführungsform ist als ein rechtsschneidendes Fräswerkzeug ausgelegt, sodass die entlang der Linksspiralen ausgebildeten ersten Umfangsschneiden LR einen in Richtung des freien Endes des Schneidenabschnitts 2 wirkenden "drückenden" Schnitt ausführen, wohingegen die entlang der Rechtsspiralen ausgebildeten zweiten Umfangsschneiden RR einen in Richtung des Einspannabschnitts 1 wirkenden "ziehenden" Schnitt ausführen. Sowohl die ersten Umfangsschneiden LR als auch die zweiten Umfangschneiden RR sind bei der ersten Ausführungsform jeweils rechtsschneidend ausgeführt.

Wie insbesondere in Fig. 2 zu sehen ist, schließen sich an die ersten Umfangsschneiden LR in Umfangsrichtung, also hinter den ersten Umfangschneiden LR bezüglich der vorgegebenen Rotationsrichtung des Fräswerkzeugs 100, erste Freiflächen 5 an. An die zweiten Umfangschneiden RR schließen sich in Umfangsrichtung, also hinter den zweiten Umfangsschneiden RR bezüglich der vorgegebenen Rotationsrichtung des Fräswerkzeugs 100, zweite Freiflächen 6 an. In Fig. 2 sind die ersten Freiflächen 5 und die zweiten Freiflächen 6 jeweils zur besseren Erkennbarkeit durch eine Mehrzahl von parallel zueinander verlaufenden Linien hervorgehoben dargestellt.

Wie in der Schnittdarstellung in einer Ebene senkrecht zur ersten Umfangsschneide LR in Fig. 3 zu sehen ist, verläuft die erste Freifläche 5 unter einem relativ kleinen positiven ersten Freiwinkel γ. Wie ebenfalls in Fig. 3 zu sehen ist, schließt sich an die erste Freifläche 5 in Umfangsrichtung, d.h. hinter der ersten Freifläche 5 bezüglich der vorgegebenen Rotationsrichtung des Fräswerkzeugs 100, eine erste Sekundärfreifläche 7 an. Die erste Sekundärfreifläche 7 verläuft dabei unter einem ersten Sekundärfreiwinkel ε, der größer als der erste Freiwinkel γ ist.

Wie in der Schnittdarstellung in einer Ebene senkrecht zur zweiten Umfangsschneide RR in Fig. 4 zu sehen ist, verläuft die zweite Freifläche 6 unter einem relativ kleinen positiven zweiten Freiwinkel δ. Wie ebenfalls in Fig. 4 zu sehen ist, schließt sich an die zweite Freifläche 6 in Umfangsrichtung, d.h. hinter der zweiten Freifläche 6 bezüglich der vorgegebenen Rotationsrichtung des Fräswerkzeugs 100, eine zweite Sekundärfreifläche 8 an. Die zweite Sekundärfreifläche 8 verläuft dabei unter einem zweiten Sekundärfreiwinkel φ, der größer als der zweite Freiwinkel δ ist.

Wie insbesondere in Fig. 2 und Fig. 5 zu sehen ist, ist in dem Schneidenabschnitt 2 ferner eine Mehrzahl von Hilfsspannuten HS ausgebildet. Die Hilfsspannuten HS erstrecken sich ebenfalls spiralförmig in dem Schneidenabschnitt 2 und unterteilen die durch die sich kreuzenden ersten Hauptspannuten LS und zweiten Hauptspannuten RS gebildeten Schneideinheiten 3. Bei der ersten Ausführungsform sind die Hilfsspannuten HS entlang Rechtsspiralen ausgebildet, die unter dem gleichen Spiralwinkel α wie die zweiten Hauptspannuten RS verlaufen. Die Anzahl der Hilfsspannuten HS entspricht dabei der Anzahl der zweiten Hauptspannuten RS und die Hilfsspannuten HS sind gegenüber den zweiten Hauptspannuten RS in Umfangsrichtung versetzt an dem Schneidenabschnitt 2 ausgebildet, wie insbesondere in Fig. 5 zu sehen ist. Die Kanten der Hilfsspannuten HS sind dabei in Umfangsrichtung um einen ersten Abstandswinkel A1 hinter den zweiten Hauptspannuten RS ausgebildet und um einen zweiten Abstandswinkel A2 von der jeweils nachfolgenden zweiten Hauptspannut RS beabstandet, wobei der zweite Abstandswinkel A2 größer als der erste Abstandswinkel A1 ist, d.h. A2 > A1.

Wie in Fig. 5 zu sehen ist, erstrecken sich die zweiten Hauptspannuten RS in radialer Richtung bis zu einem Abstand von der Längsachse Z, der einen ersten Kerndurchmesser föK1 bestimmt. Wie in Fig. 6 zu sehen ist, erstrecken sich die ersten Hauptspannuten LS in radialer Richtung bei der gezeigten Ausführungsform ebenfalls bis zu einem Abstand von der Lächsachse Z, der dem ersten Kerndurchmesser föK1 entspricht. Die Hilfsspannuten HS sind in radialer Richtung hingegen weniger tief als die ersten Hauptspannuten LS und als die zweiten Hauptspannuten RS ausgebildet, wie in Fig. 5 zu sehen ist. Die Hilfsspannuten HS erstrecken sich nur bis zu einem Abstand von der Längsachse, der einen zweiten Kerndurchmesser föK2 bestimmt, wobei gilt föK1 < föK2. Die Hilfsspannuten HS erstrecken sich tiefer in das Material des Schneidenabschnitts 2 als die ersten Freiflächen 5 und die ersten Sekundärfreiflächen 7. Die Hilfsspannuten HS erstrecken sich auch tiefer in das Material des Schneidenabschnitts 2 als die zweiten Freiflächen 6 und die zweiten Sekundärfreiflächen 8. Die Hilfsspannuten HS sind gegenüber den ersten und zweiten Freiflächen 5; 6 somit in radialer Richtung vertieft ausgeführt.

In Fig. 2 ist ersichtlich, dass die Hilfsspannuten HS die durch die sich kreuzenden ersten Hauptspannuten LS und zweiten Hauptspannuten RS gebildeten Schneideinheiten 3 jeweils in einen ersten Bereich B1 und einen zweiten Bereich B2 unterteilen. In dem ersten Bereich B1 befinden sich die erste Umfangsschneide LR und die zugehörige erste Freifläche 5. In dem zweiten Bereich B2 befinden sich die zweite Umfangsschneide RR und die zugehörige zweite Freifläche 6. Bei dem konkret dargestellten Beispiel befindet sich in dem ersten Bereich B1 auch noch die erste Sekundärfreifläche 7 und in dem zweiten Bereich B2 befindet sich auch noch die zweite Sekundärfreifläche 8.

Wie in Fig. 6 zu sehen ist, sind die rechtsschneidend ausgebildeten, entlang Linksspiralen verlaufenden ersten Umfangsschneiden LR jeweils mit einem positiven Spanwinkel η versehen. Dies ist z.B. auch in Fig. 3 gut zu erkennen, wo allerdings der Spanwinkel η selbst nicht eingezeichnet ist. Wie in Fig. 5 zu sehen ist, sind auch die ebenfalls rechtsschneidend ausgebildeten, entlang Rechtsspiralen verlaufenden zweiten Umfangsschneiden RR jeweils mit einem positiven Spanwinkel χ versehen. Dies ist z.B. auch in Fig. 4 gut zu erkennen, wo allerdings ebenfalls der Spanwinkel χ nicht eingezeichnet ist. Wie in den Fig. 4 und Fig. 5 zu erkennen ist, sind bei der Ausführungsform ferner auch die durch die Hilfsspannuten HS gebildeten, in die vorgegebene Rotationsrichtung des Fräswerkzeugs 100 weisenden Kanten unter einem positiven Winkel x ausgebildet.

### ZWEITE AUSFÜHRUNGSFORM

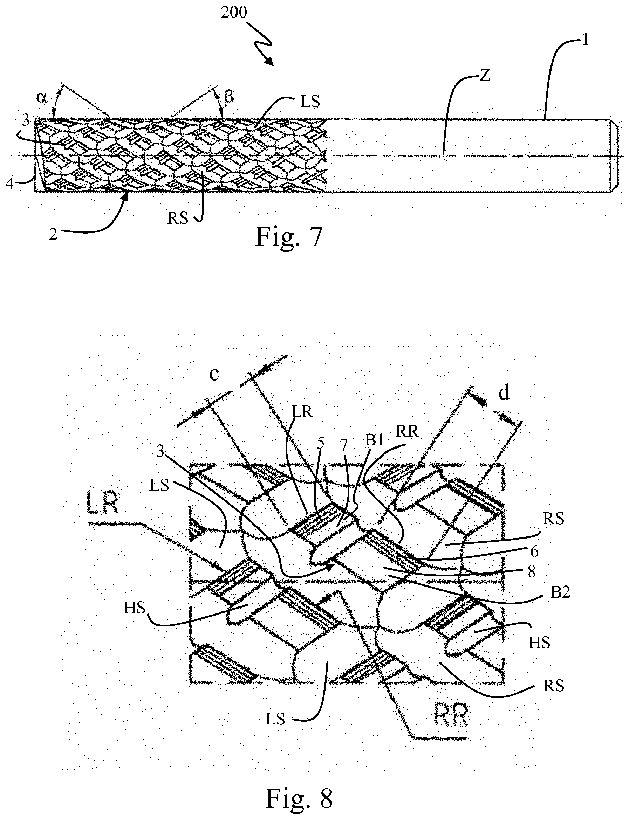

Eine zweite Ausführungsform des Fräswerkzeugs 200 für die Bearbeitung von Faserverbundwerkstoffen wird im Folgenden unter Bezugnahme auf die Fig. 7 bis Fig. 12 beschrieben.

Zur Vermeidung von Wiederholungen werden im Folgenden lediglich die Unterschiede gegenüber der zuvor beschriebenen ersten Ausführungsform eingehend erläutert und es werden für entsprechende Merkmale dieselben Bezugszeichen verwendet.

Die in den Fig. 7 bis Fig. 12 gezeigte zweite Ausführungsform unterscheidet hauptsächlich darin von der zuvor beschriebenen ersten Ausführungsform, dass die Anzahl der ersten Hauptspannuten LS und der zweiten Hauptspannuten RS verändert ist und dass die Nebenspannuten NS bei der zweiten Ausführungsform entlang von Linksspiralen ausgebildet sind, die parallel zu den ersten Hauptspannuten LS verlaufen, und nicht entlang von Rechtsspiralen, wie es bei der ersten Ausführungsform der Fall war. Obwohl bei der zweiten Ausführungsform ein Beispiel gezeigt ist, bei dem insgesamt zehn zweite Hauptspannuten RS und insgesamt sechs erste Hauptspannuten LS an dem Schneidenabschnitt 2 vorgesehen sind, sind auch hier - wie bei der ersten Ausführungsform - andere Anzahlen der ersten Hauptspannuten LS und der zweiten Hauptspannuten RS möglich.

Auch bei der zweiten Ausführungsform verlaufen die ersten Hauptspannuten LS unter einem negativen Spiralwinkel β und die zweiten Hauptspannuten RS verlaufen unter einem positiven Spiralwinkel α, der betragsmäßig von dem Spiralwinkel β verschieden ist. Ferner sind auch bei der zweiten Ausführungsform sowohl die ersten Umfangsschneiden LR als auch die zweiten Umfangsschneiden RR rechtsschneidend ausgebildet, wobei die ersten Umfangsschneiden einen "drückenden" Schnitt ausführen und die zweiten Umfangsschneiden einen "ziehenden" Schnitt.

Durch die verglichen mit der ersten Ausführungsform andere Anzahl der ersten Hauptspannuten LS und der zweiten Hauptspannuten RS sowie dadurch, dass die Hilfsspannuten HS bei der zweiten Ausführungsform entlang von Linksspiralen verlaufen, unterscheiden sich die Schneidenlängen der ersten und zweiten Umfangsschneiden LR, RR von der ersten Ausführungsform. Bei der zweiten Ausführungsform haben die ersten Umfangsschneiden LR eine erste Schneidenlänge c und die zweiten Umfangsschneiden RR haben eine zweite Schneidenlänge d. Bei dem konkret dargestellten Beispiel ist die erste Schneidenlänge c von der zweiten Schneidenlänge d verschieden, d.h. c ≠ d.

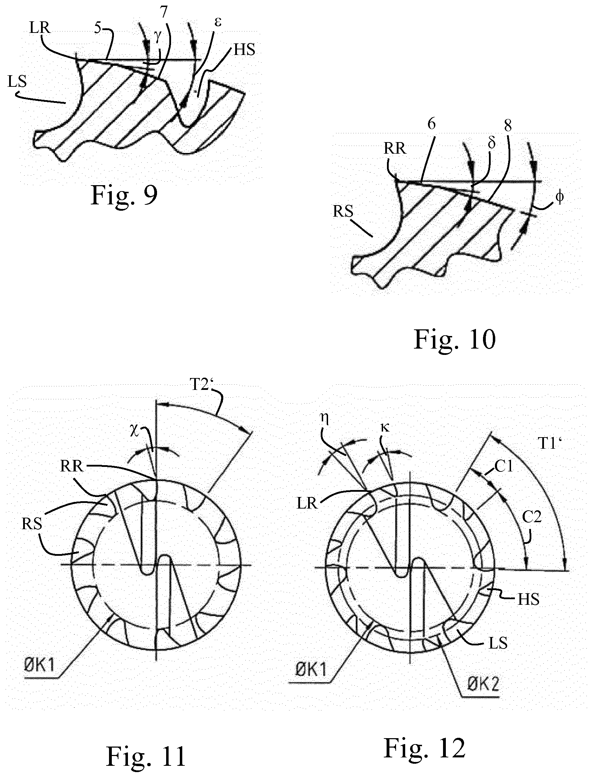

Aufgrund der gegenüber der ersten Ausführungsform verschiedenen Anzahl von ersten Hauptspannuten LS und zweiten Hauptspannuten RS unterscheiden sich auch die ersten Teilungswinkel T1', unter denen die ersten Hauptspannuten LS über den Umfang verteilt sind, und die zweiten Teilungswinkel T2' unter denen die zweiten Hauptspannuten über den Umfang verteilt sind, von der ersten Ausführungsform, wie in den Fig. 11 und den Fig. 12 zu sehen ist.

Die Kanten der Hilfsspannuten HS sind bei der zweiten Ausführungsform in Umfangsrichtung um einen ersten Abstandswinkel C1 hinter den ersten Hauptspannuten LS ausgebildet und um einen zweiten Abstandswinkel C2 von der jeweils nachfolgenden ersten Hauptspannut LS beabstandet, wobei der zweite Abstandswinkel C2 größer als der erste Abstandswinkel C1 ist, d.h. C2 > C1.

### ABWANDLUNGEN

Obwohl sowohl bei der zuvor beschriebenen ersten Ausführungsform als auch bei zweiten Ausführungsform das Fräswerkzeug 100, 200 jeweils als rechtsschneidendes Werkzeug ausgebildet ist, ist gleichermaßen auch eine Ausbildung als linksschneidendes Werkzeug möglich. In diesem Fall werden die ersten Umfangsschneiden und die zweiten Umfangsschneiden jeweils an den anderen beiden Seiten der jeweiligen Schneideinheiten 3 ausgebildet, sodass linksschneidende entlang von Linksspiralen angeordnete erste Umfangsschneiden und linksschneidende entlang von Rechtsspiralen angeordnete zweite Umfangsschneiden an den jeweiligen Schneideinheiten resultieren.

## Patentansprüche

1. Fräswerkzeug (100; 200) für die Bearbeitung von Faserverbundwerkstoffen, mit
einem Einspannabschnitt (1) und einem Schneidenabschnitt (2), die sich entlang einer Längsachse (Z) erstrecken,
wobei der Schneidenabschnitt (2) in einer zylindrischen Grundform ausgeführt ist, deren Außenumfang durch eine Mehrzahl von sich kreuzenden, als Linksspiralen ausgebildeten ersten Hauptspannuten (LS) und als Rechtsspiralen ausgebildeten zweiten Hauptspannuten (RS) in eine Vielzahl von Schneideinheiten (3) unterteilt ist, die jeweils eine entlang einer Linksspirale verlaufende erste Umfangsschneide (LR) und eine entlang einer Rechtsspirale verlaufende zweite Umfangsschneide (RR) aufweisen,
wobei die ersten Umfangsschneiden (LR) und die zweiten Umfangsschneiden (RR) jeweils entlang einer gemeinsamen umhüllenden Zylindermantelfläche ausgebildet sind, die den Außenumfang des Schneidenabschnitts (2) bestimmt, sich an die ersten Umfangsschneiden (LR) in Umfangsrichtung jeweils unter einem ersten Freiwinkel (γ) verlaufende erste Freiflächen (5) anschließen und sich an die zweiten Umfangsschneiden (RR) in Umfangsrichtung jeweils unter einem zweiten Freiwinkel (δ) verlaufende zweite Freiflächen (6) anschließen, wobei an dem Schneidenabschnitt (2) eine Mehrzahl von sich spiralförmig erstreckenden, gegenüber den ersten und zweiten Freiflächen (5; 6) in radialer Richtung vertieft ausgeführten Hilfsspannuten (HS) ausgebildet ist, die die einzelnen Schneideinheiten (3) in einen ersten Bereich (B1), an dem die jeweilige erste Umfangsschneide (LR) mit der ersten Freifläche (5) ausgebildet ist, und einen zweiten Bereich (B2), an dem die jeweilige zweite Umfangsschneide (RR) mit der zweiten Freifläche (6) ausgebildet ist, unterteilen,
**dadurch gekennzeichnet, dass** sich die Hilfsspannuten (HS) entlang Linksspiralen erstrecken, die parallel zu den ersten Hauptspannuten (LS) verlaufen, oder sich die Hilfsspannuten (HS) entlang Rechtsspiralen erstrecken, die parallel zu den zweiten Hauptspannuten (RS) verlaufen.

2. Fräswerkzeug nach einem der vorangehenden Ansprüche, wobei die Hilfsspannuten (HS) in radialer Richtung weniger tief ausgebildet sind als die ersten und zweiten Hauptspannuten (LS; RS).

3. Fräswerkzeug nach einem der vorangehenden Ansprüche, wobei der Betrag des Spiralwinkels (α) der zweiten Hauptspannuten (RS) von dem Betrag des Spiralwinkels (β) der ersten Hauptspannuten (LS) verschieden ist.

4. Fräswerkzeug nach einem der vorangehenden Ansprüche, wobei eine erste Schneidenlänge (b; c) der jeweiligen ersten Umfangsschneide (LR) von einerzweiten Schneidenlänge (a; d) der jeweiligen zweiten Umfangsschneide (RR) verschieden ist.

5. Fräswerkzeug nach einem der vorangehenden Ansprüche, wobei sich in Umfangsrichtung an die erste Freifläche (5) jeweils eine erste Sekundärfreifläche (7) mit einem ersten Sekundärfreiwinkel (ε) anschließt, der größer als der erste Freiwinkel (γ) ist.

6. Fräswerkzeug nach einem der vorangehenden Ansprüche, wobei sich in Umfangsrichtung an die zweite Freifläche (6) jeweils eine zweite Sekundärfreifläche (8) mit einem zweiten Sekundärfreiwinkel (φ) anschließt, der größer als der zweite Freiwinkel (δ) ist.

7. Fräswerkzeug nach einem der vorangehenden Ansprüche, wobei sowohl die ersten Umfangsschneiden (LR) als auch die zweiten Umfangsschneiden (RR) rechtsschneidend ausgebildet sind oder sowohl die ersten Umfangsschneiden (LR) als auch die zweiten Umfangsschneiden (RR) linksschneidend ausgebildet sind.

8. Fräswerkzeug nach einem der vorangehenden Ansprüche, wobei der Einspannabschnitt (1) und der Schneidenabschnitt (2) einstückig ausgebildet sind.

## Claims

1. Milling tool (100; 200) for machining fibre composites, having a clamping section (1) and a cutting section (2) which extend along a longitudinal axis (Z),
wherein the cutting section (2) is designed in a cylindrical basic shape, the outer circumference of which is divided by a plurality of intersecting first main chip grooves (LS), which are designed as left-hand spirals, and second main chip grooves (RS), which are designed as right-hand spirals, into a multiplicity of cutting units (3) which each have a first circumferential cutter (LR) running along a left-hand spiral and a second circumferential cutter (RR) running along a right-hand spiral,
wherein the first circumferential cutters (LR) and the second circumferential cutters (RR) are each formed along a common enveloping cylindrical casing surface which determines the outer circumference of the cutting section (2), the first circumferential cutters (LR) are each adjoined in the circumferential direction by first flank surfaces (5) running at a first clearance angle (γ) and the second circumferential cutters (RR) are each adjoined in the circumferential direction by second flank surfaces (6) running at a second clearance angle (5),
wherein a plurality of auxiliary chip grooves (HS) are formed on the cutting section (2), said auxiliary chip grooves extending spirally and being recessed in the radial direction in relation to the first and second flank surfaces (5; 6) and dividing the individual cutting units (3) into a first region (B1) on which the respective first circumferential cutter (LR) with the first flank surface (5) is formed, and into a second region (B2) on which the respective second circumferential cutter (RR) with the second flank surface (6) is formed,
**characterized in that** the auxiliary chip grooves (HS) extend along left-hand spirals which run parallel to the first main chip grooves (LS), or the auxiliary chip grooves (HS) extend along right-hand spirals which run parallel to the second main chip grooves (RS).

2. Milling tool according to one of the preceding claims, wherein the auxiliary chip grooves (HS) are less deep in the radial direction than the first and second main chip grooves (LS; RS).

3. Milling tool according to one of the preceding claims, wherein the value of the spiral angle (α) of the second main chip grooves (RS) differs from the value of the spiral angle (β) of the first main chip grooves (LS).

4. Milling tool according to one of the preceding claims, wherein a first cutting length (b; c) of the respective first circumferential cutter (LR) differs from a second cutting length (a; d) of the respective second circumferential cutter (RR).

5. Milling tool according to one of the preceding claims, wherein the first flank surface (5) is in each case adjoined in the circumferential direction by a first secondary flank surface (7) with a first secondary clearance angle (ε) which is greater than the first clearance angle (γ).

6. Milling tool according to one of the preceding claims, wherein the second flank surface (6) is in each case adjoined in the circumferential direction by a second secondary flank surface (8) with a second secondary clearance angle (φ) which is greater than the second clearance angle (δ).

7. Milling tool according to one of the preceding claims, wherein both the first circumferential cutters (LR) and the second circumferential cutters (RR) are right-cutting or both the first circumferential cutters (LR) and the second circumferential cutters (RR) are left-cutting.

8. Milling tool according to one of the preceding claims, wherein the clamping section (1) and the cutting section (2) are formed integrally.

## Revendications

1. Outil de fraisage (100 ; 200) destiné au traitement de matériaux composites fibreux, ledit outil de fraisage comprenant
une portion de serrage (1) et une portion de coupe (2) qui s'étendent le long d'un axe longitudinal (Z),
la portion de coupe (2) ayant une forme de base cylindrique dont la périphérie extérieure est divisée, par une pluralité de premières rainures à copeaux principales (LS) qui sont conçues comme des spirales gauches et de deuxièmes rainures à copeaux principales (RS) qui sont conçues comme des spirales droites qui se croisent, en un grand nombre d'unités de coupe (3) qui comportent chacune une première arête de coupe périphérique (LR) qui s'étend suivant une spirale gauche et une deuxième arête de coupe périphérique (RR) qui s'étend suivant une spirale droite,
les premières arêtes de coupe périphériques (LR) et les deuxièmes arêtes de coupe périphériques (RR) étant chacune formées le long d'une surface de cylindre latérale enveloppante commune qui détermine la périphérie extérieure de la portion de coupe (2), des premières faces de dépouille (5), qui s'étendent chacune avec un premier angle de dépouille (γ) dans la direction circonférentielle, se raccordant aux premières arêtes de coupe périphériques (LR) et des deuxièmes faces de dépouille (6), qui s'étendent chacune avec un deuxième angle de dépouille (δ) dans la direction circonférentielle, se raccordant aux deuxièmes arêtes de coupe périphériques (RR),
une pluralité de rainures à copeaux auxiliaires (HS), qui s'étendent en spirale et qui sont ménagées dans une direction radiale par rapport aux première et deuxième faces de dépouille (5 ; 6), étant formées au niveau de la portion de coupe (2) et divisant les unités de coupe individuelles (3) en une première zone (B1), au niveau de laquelle la première arête de coupe périphérique respective (LR) est formée avec la première face de dépouille (5), et une deuxième zone (B2) au niveau de laquelle la deuxième arête de coupe périphérique respective (RR) est formée avec la deuxième face de dépouille (6),
**caractérisé en ce que** les rainures à copeaux auxiliaires (HS) s'étendent suivant des spirales gauches qui s'étendent parallèlement aux premières rainures à copeaux principales (LS) ou les rainures à copeaux auxiliaires (HS) s'étendent suivant des spirales droites qui s'étendent parallèlement aux deuxièmes rainures à copeaux principales (RS).

2. Outil de fraisage selon l'une des revendications précédentes, dans lequel les rainures à copeaux auxiliaires (HS) sont formées moins profondément dans une direction radiale que les première et deuxième rainures à copeaux principales (LS ; RS).

3. Outil de fraisage selon l'une des revendications précédentes, la valeur absolue de l'angle spiral (α) des deuxièmes rainures à copeaux principales (RS) étant différente de la valeur absolue de l'angle spiral (β) des premières rainures à copeaux principales (LS).

4. Outil de fraisage selon l'une des revendications précédentes, une première longueur d'arête de coupe (b ; c) de la première arête de coupe périphérique respective (LR) étant différente d'une deuxième longueur d'arête de coupe (a ; d) de la deuxième arête de coupe périphérique respective (RR).

5. Outil de fraisage selon l'une des revendications précédentes, une première face de dépouille secondaire (7) se raccordant à la première face de dépouille (5) dans direction circonférentielle avec un premier angle de dépouille secondaire (ε) qui est supérieur au premier angle de dépouille (γ).

6. Outil de fraisage selon l'une des revendications précédentes, une deuxième face de dépouille secondaire (8) se raccordant à la deuxième face de dépouille (6) dans la direction circonférentielle avec un deuxième angle de dépouille secondaire (φ) supérieur au deuxième angle de dépouille (δ).

7. Outil de fraisage selon l'une des revendications précédentes, aussi bien les premières arêtes de coupe périphériques (LR) que les deuxièmes arêtes de coupe périphériques (RR) étant conçues pour effectuer une coupe à droite, ou aussi bien les premières arêtes de coupe périphériques (LR) que les deuxièmes arêtes de coupe périphériques (RR) étant conçues pour effectuer une coupe à gauche.

8. Outil de fraisage selon l'une des revendications précédentes, la portion de serrage (1) et la portion de coupe (2) étant conçues d'une seule pièce.
